# EUROPÄISCHE PATENTSCHRIFT

(11) **EP 1 359 077 B1**
(45) Veröffentlichungstag und Bekanntmachung des Hinweises auf die Patenterteilung: **16.09.2009**
(21) Anmeldenummer: 03003981.2
(22) Anmeldetag: 22.02.2003
(51) Int. Cl.: B60T 8/00, B60T 13/66, B60T 17/22

(54) **Verfahren und Anordnung zur Überwachung von Fahrzeugbremsen elektronisch geregelter Bremssysteme von Fahrzeugen und Fahrzeugkombinationen auf Überlast**
Method and device for monitoring overload of brakes of electronically controlled brake systems of vehicles and vehicle combinations
Dispositif et procédé pour surveiller la surcharge des freins des systèmes de freinage contrôlé électronique

(30) Priorität: 29.04.2002 DE 10219039
(43) Veröffentlichungstag der Anmeldung: 05.11.2003
(73) Patentinhaber: WABCO GmbH, 30453 Hannover (DE)
(72) Erfinder: Eckert, Horst, 31547 Rehburg-Loccum (DE); Gaulke, Arnd, 30952 Ronnenberg (DE)
(74) Vertreter: Schrödter, Manfred

(56) Entgegenhaltungen:
- EP-A- 0 189 082
- EP-A- 0 247 253
- EP-A- 0 421 066
- DE-A- 4 024 771
- DE-A- 4 418 768

## Beschreibung

Die Erfindung betrifft ein Verfahren zur Überwachung von Fahrzeugbremsen von elektronisch geregelten Bremssystemen von Fahrzeugen und Fahrzeugkombinationen auf Überlast gemäß Oberbegriff des Anspruchs 1 sowie eine Anordnung zur Durchführung des Verfahrens gemäß Oberbegriff des Anspruchs 8.

Bei EBS-Systemen werden bekanntlich der Bremsbelagverschleiß und das Adhäsionsverhältnis zwischen Fahrzeugrad und Fahrbahn bzw. der Kraftschlussbeiwert zwischen Rad und Fahrbahn geregelt, wobei im Bereich geringer Abbremsung der Verschleiß und im Bereich hoher Abbremsung die Adhäsion geregelt wird.

Betätigt der Fahrer das Bremspedal werden zuerst bis zu einem vorgebbaren Fahrer-Sollbremswert Bremsdrücke ausgesteuert, die ausschließlich nach Belagverschleißregelkriterien berechnet werden. In diesem Anfangsbereich wird bei den Berechnungen keine Rücksicht auf Achslasten genommen. Bei Überschreitung des Fahrer-Sollbremswertes wechselt das Regelsystem vom Belagverschleißregelungsbereich in den Adhäsionsregelbereich über. In diesem höheren Abbremsungsbereich überwiegen Komfort-und Sicherheitsaspekte gegenüber dem Verschleißaspekt. Das Regelungsziel im Adhäsionsregelbereich ist gleicher Bremsschlupf für alle Räder. Im Adhäsionsregelbereich werden Achslasten bei der Bremsdruckberechnung und -regelung berücksichtigt. Die in den Bremsen umzusetzende Bewegungsenergie zwischen den Achsen ist nicht mehr gleich. Werden definierte Differenzschlupfschwellen vor Erreichen des Fahrer-Sollbremswertes überschritten, erfolgt der Wechsel auch schon früher. Im Adhäsionsregelbereich ist gleiche Adhäsion, d. h. ein Differenzschlupf zwischen den Achsen von Null, das Regelungsziel.

Wenn bspw. ein vollbesetzter Bus eine Gefällestrecke herunter fährt, wird der Busfahrer seine Bremse in der Regel häufiger einsetzen müssen mit der Folge, dass die Bremsen zwangsläufig mehr oder weniger schnell heiß bzw. heißer und damit überlastet werden. Mit heißer werdender Bremse sinkt der Reibbeiwert (µ-Wert) der Bremsenreibpaarung (Bremsbelag/Bremsscheibe oder Bremsbelag/Bremstrommel), und zwar um bis zu 100 %. Ein Abfallen des Reibbeiwertes der Reibpaarung bedeutet weniger Bremskraft der Bremse.

Sind die Bremsen zwischen der Vorderachse und der Hinterachse unterschiedlich heiß, was in der Regel der Fall ist, ist dort die Bremskraftabnahme am größten, wo die Temperatur am höchsten ist. Es baut sich also ein vom Normalzustand abweichender Differenzschlupf auf. Ein solcher Differenzschlupf wird vom EBS-System ausgeregelt, dessen Regelungsziel ein Differenzschlupf von Null ist.

Normalerweise sind bei einem Fahrzeug, bspw. Nutzkraftwagen, insbesondere Lastkraftwagen und Bus, die Kühlverhältnisse für die Hinterachs-Bremsen schlechter als für die Vorderachs-Bremsen. Ferner sind regelmäßig die Hinterachslasten um ca. 50 - 100 % größer als die Vorderachslasten. Dies bedeutet, dass die Hinterradbremsen stets heißer sein werden als die Vorderradbremsen - auch schon im Verschleißregelbereich.

Die Hinterachsbremse wird, da sie heißer ist als die Vorderachsbremse, bei gleichem Bremsdruck weniger Bremskraft erzeugen. Aufgrund des erwähnten Regelungszieles des EBS-Systems (Differenzschlupf Null) wird in die Hinterachsbremse durch die EBS-Regelung mehr Bremsdruck eingesteuert. Die Hinterachsbremse wird also noch heißer mit der Gefahr einer Überhitzung und eines dadurch bedingten Ausfalls der Bremse durch Überlastung.

Es ist bekannt, bei Fahrzeugkombinationen aus einem Zug- und Anhängefahrzeug einer elektronischen Zuspannenergieregelung eine Kopplungskraftregelung (KKR) zu überlagern, durch die der Anhängersolldruck geregelt wird. Ziel dieser Kopplungskraftregelung ist eine Koppelkraft Null, d. h., dass bei einer Bremsung über die Anhängerkupplung keine oder nur eine Kraft von zulässiger Größe (Sollgröße) vom Anhängefahrzeug auf das Zugfahrzeug oder umgekehrt übertragen wird. Damit ist die Gefahr eines Einknickens des Fahrzeugzuges durch Aufschieben bzw. die Gefahr eines zu starken Aufschiebens des Anhängefahrzeugs vermieden, wodurch die Richtungsstabilität des Fahrzeugzuges verbessert wird. Außerdem soll dadurch auch ein Ziehen oder zu starkes Ziehen durch das Zugfahrzeug bei einem Bremsvorgang vermieden werden. Treten bei solchen Kopplungskraftregelungen der Zuspannenergie zwischen den Radbremsen des Zugfahrzeugs und des Anhängefahrzeugs unterschiedliche Radbremsentemperaturen auf, insbesondere auch durch unterschiedliche Beladungsverteilung zwischen Zugfahrzeug und Anhängefahrzeug, so sind die Bremskräfte der heißeren Radbremsen kleiner als die Bremskräfte der Radbremsen mit den niedrigeren Temperaturen, wodurch wiederum die Gefahr eines Aufschiebens des Anhängefahrzeugs oder eines Ziehens durch das Zugfahrzeug besteht. Bei höherer Belastung der hinteren Achse des Zugfahrzeugs werden die Radbremsen des Zugfahrzeuges heißer als die Radbremsen des Anhängefahrzeugs und bei höherer Belastung der Achsen des Anhängefahrzeugs werden die Radbremsen des Anhängefahrzeugs heißer als die Radbremsen der Zugmaschine. Heißere Zugwagenbremsen bedeuten Ziehen und heißere Anhängerbremsen bedeuten Aufschieben. Überschreiten die Temperaturen der Radbremsen einen vorgebbaren, definierten Grenzwert, besteht die Gefahr einer Überlastung und eines Ausfalls der Bremse.

Durch die EP 0 188 685 B1 ist eine Übedast-Schutz- und/oder-Warneinrichtung bekannt. Bei dieser Einrichtung wird ein Ist-Bremsdruck mit einem Soll-Bremsdruck verglichen. Wenn der Ist-Bremsdruck vom Soll-Bremsdruck um einen vorbestimmten Wert abweicht, wird ein Warnsignal abgegeben. Diese Einrichtung bezieht sich auf eine einzelne Bremse.

Durch die EP 0 320 602 B1 ist eine Überlast-Warneinrichtung für eine Anhängerbremse bekannt. Es werden der Bremsdruck im Zugfahrzeug und der Bremsdruck im Anhängefahrzeug gemessen. In einer Vergleichseinrichtung wird aus den beiden Drücken ein Verhältniswert gebildet. Es wird ein Warnsignal abgegeben, wenn die Änderungsgeschwindigkeit des Verhältniswertes gleich oder größer ist als ein vorbestimmter Schwellwert.

Aus der EP 0 417 431 B1 ist ein Verfahren zur Überwachung einer Bremseinrichtung auf Überlast bekannt, das sich auf eine einzelne Trommelbremse bezieht. Es wird die Verformung eines ausgewählten Bauteiles (Bremstrommel) gemessen und mit einer abgespeicherten Verformungskennlinie verglichen. Wenn die während einer Bremsung auftretende Ist-Verformung gleich oder größer ist als die abgespeicherte Verformung, wird ein Warnsignal abgegeben.

Durch die EP 0 569 697 B1 ist ein Verfahren zur Überwachung der wenigstens einen Anhängerbremse eines Fahrzeugzuges auf Überlast bekannt. Das elektronische Bremssystem ist mit permanenter Koppelkraftregelung ausgerüstet. Bei einer Bremsung wird in dem Motorfahrzeug ein die Energiezufuhr zu der Motorfahrzeugbremse mitbestimmendes Energieanforderungssignal erzeugt, aus dem ein die Anhängerbremse mitsteuerndes Anhängerenergiesignal abgeleitet wird, wobei die in der Kupplung anstehende Kupplungskraft mittels des Anhängerenergiesignals geregelt wird. Es wird auf Überlast erkannt und wird ein Warnsignal abgegeben, wenn bei gegebenem Energieanforderungssignal das Anhängerenergiesignal nicht nur vorübergehend ansteigt.

Die EP 0 569 698 B1 offenbart ein Verfahren zur Überwachung der wenigstens einen Motorfahrzeugbremse eines Motorfahrzeugs eines Fahrzeugzuges auf Überlast. Es wird hier, wie bei der EP 0 569 697 B1 das Anhängerenergiesignal beobachtet, nur dass hier auf eine Überlast der Motorfahrzeugbremse erkannt wird und dann ein entsprechendes Warnsignal abgegeben wird, wenn das Anhängerenergiesignal als Ergebnis der Koppelkraftregelungen bei gegebenem Energieanforderungssignal nicht nur vorübergehend abfällt.

Bei all diesen bekannten Verfahren werden physikalische Größen, wie Druck, Kraft, Moment, in einem Vergleichsverfahren ausgewertet. Wird beim Vergleich festgestellt, dass vordefinierte Grenzwerte überschritten werden, erfolgt eine Warnung für den Fahrer, der zum Schutz vor weiterer Überlastung seine weitere Fahrweise entsprechend anpassen muss.

Aus der EP-A-0189082 ist weiter eine Einrichtung zum Messen und/oder Regeln einer Bremskraft und/oder eines Bremsmomentes bekannt, mit welcher die Bremsmomente eines Fahrzeugs in Abhängigkeit von der Bremsentemperatur gesteuert werden. Bei Überschreitung eines Grenzwertes einer Bremsentemperatur wird ein Warnsignal erzeugt. Hierzu werden die Temperaturen der Radbremsen des Fahrzeugs oder der Teilfahrzeuge ermittelt und mit einem vorbestimmten Temperaturgrenzwert verglichen. Ein erstes Fahrer-Warnsignal wird ausgegeben, wenn die Temperatur einer Radbremse den Temperaturgrenzwert überschreitet. Ein zweites Fahrer-Warnsignal wird ausgegeben, wenn die ermittelten Temperaturen der Radbremsen an mehr als einer Achse des Fahrzeugs den Temperaturgrenzwert überschreiten.

Die Aufgabe der vorliegenden Erfindung besteht darin, ein Verfahren der eingangs genannten Art anzugeben, durch das eine temperaturbedingte Überlastung von Bremsen überwacht wird und bei erkannter Überlast ein Fahrerwarnsignal abgegeben wird. Außerdem soll eine Anordnung zur Durchführung des Verfahrens angegeben werden.

Diese Aufgabe wird durch die Erfindung gemäß Anspruch 1 gelöst. Eine Anordnung zur Durchführung des Verfahrens ist im Anspruch 8 angegeben.

Vorteilhafte und zweckmäßige Weiterbildungen sind in den Unteransprüchen angegeben.

Die Erfindung schlägt zur Lösung der Aufgabe ein Verfahren zur Überlast-Überwachung von Fahrzeugbremsen von elektronisch geregelten Bremssystemen (EBS-Systemen) von Fahrzeugen sowie von Fahrzeugkombinationen aus wenigstens einem Zug- und Anhängefahrzeug, ggf. mit einer Koppelkraftregelung vor, bei dem die Temperaturen oder Temperaturmittelwerte der Radbremsen der Räder des Fahrzeugs oder der Teilfahrzeuge der Fahrzeugkombination ermittelt und mit einem vorbestimmten Temperaturgrenzwert verglichen werden, wobei ein erstes Fahrer-Warnsignal "Warnstufe 1" ausgegeben wird, wenn die Temperatur einer Radbremse oder der Temperaturmittelwert der Radbremsen an einer Achse des Fahrzeugs oder eines Teilfahrzeugs den Temperaturgrenzwert überschreitet, und ein zweites Fahrer-Warnsignal "Warnstufe 2" ausgegeben wird, wenn die ermittelten Temperaturen oder Temperaturmittelwerte der Radbremsen an mehr als einer Achse des Fahrzeugs oder wenigstens eines Teilfahrzeugs oder aller Teilfahrzeuge der Fahrzeugkombination den Temperaturgrenzwert überschreiten.

Die Warnsignale sind dabei subjektiv zu empfindende Signale wie Bremspedalfeeling oder Fadingempfinden.

Die Erfindung schlägt also vor, eine Warnung der Stufe 1 auszugeben, wenn bei einem Fahrzeug oder bei einem Teilfahrzeug einer Fahrzeugkombination bei einem Bremsvorgang an einer Radbremse eine definiert hohe Temperatur oder an einer Achse ein definiert hoher Temperaturmittelwert, d. h. den Grenzwert überschreitende Temperaturen, auftreten, und eine Warnung der Stufe 2 auszugeben, wenn bei einem Fahrzeug oder wenigstens einem Teilfahrzeug an mehr als einer Achse definiert hohe Temperaturen auftreten, da in diesem Falle eine höhere Gefahr für eine Überlastung und den Ausfall von Bremsen besteht. Wenn an beiden bzw. sämtlichen Teilfahrzeugen einer Fahrzeugkombination zu hohe Radbremsentemperaturen auftreten, erfolgt ebenfalls eine Warnung der Stufe 2.

Die Erfindung soll nachfolgend anhand der beigefügten Zeichnung, in der Ausführungsbeispiele dargestellt sind, näher erläutert werden.

Es zeigen
- Fig. 1: schematisch ein Fahrzeug mit einer EBS-Bremsanlage und
- Fig. 2: schematisch eine Fahrzeugkombination aus einem Zugfahrzeug und einem Fahrzeuganhänger mit jeweils einer EBS-Bremsanlage.

Gleiche und einander entsprechende Bauteile sind in den Figuren der Zeichnung mit den gleichen Bezugszeichen versehen.

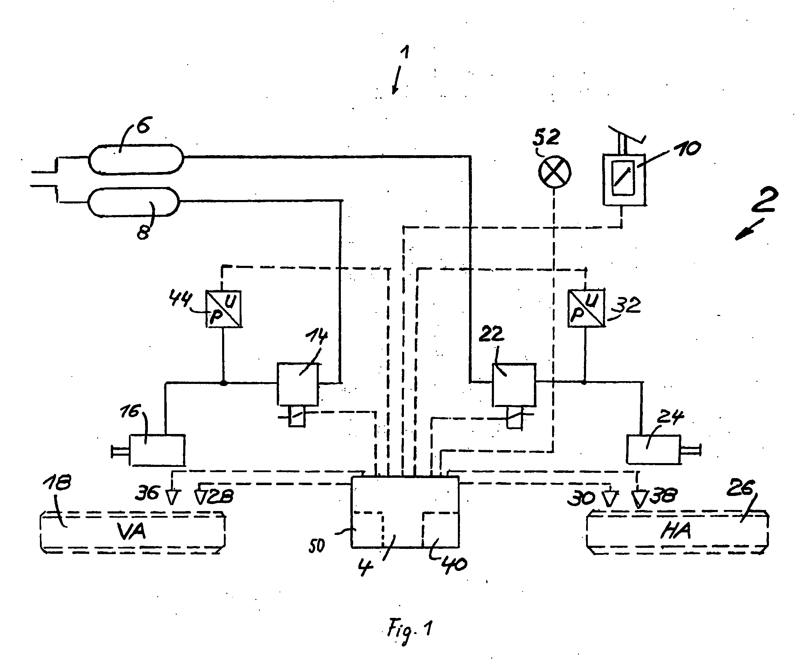

Die Fig. 1 zeigt schematisch ein Fahrzeug 1 mit einer bspw. pneumatisch betriebenen EBS-Bremsanlage 2 mit einem Zentralsteuergerät 4 für die Zuspannenergie-Regelung, in das i. A. auch das Antiblockierregelsystem integriert ist. Energieleitungen, bspw. Druckleitungen, sind mit durchgezogenen Linien und elektrische Leitungen mit gestrichelten Linien eingezeichnet. Es sind nur die Räder und zugehörige Bauteile, bspw. pneumatische Bauteile, einer Seite der Vorderachse VA und der Hinterachse HA des Fahrzeugs dargestellt.

Die zur Betätigung der Bremsen benötigte Energie, bspw. Druckluft, wird in Energiespeichern 6, 8, bspw. Druckluftbehältern, bereit gestellt. Über einen Fahrer-Bremswertgeber 10 gibt der Fahrer dem EBS-System einen Sollwert vor. Der Bremskreis ist hier zweikreisig ausgebildet und führt zum einen über einen Energiezuteiler 14, bspw. Druckmodulator, zu einer Zuspanneinrichtung 16, bspw. Bremszylinder, für ein Rad mit Radbremse 18 der Vorderachse (VA). Der andere Bremskreis führt über einen weiteren Energiezuteiler 22, bspw. Druckmodulator, zu einer Zuspanneinrichtung 24, bspw. Bremszylinder, für ein Rad mit Radbremse 26 der Hinterachse (HA). Das Antiblockiersystem erhält über Radsensoren 28, 30 Informationen über das Drehverhalten der Räder. Sollten diese eine Blockierneigung zeigen, gibt das Steuergerät 4 bzw. das in das Steuergerät integrierte ABS-System in bekannter Weise elektrische Signale an die Energiezuteiler 14, 22, bspw. Druckmodulatoren, aus, welche die Zuspannenergie, bspw. den Bremsdruck, herabsetzen und somit die Blockierneigung wieder beseitigen können.

Die Zentralsteuereinheit 4 besitzt Eingänge für Energiesensoren 32, 44, bspw. Drucksensoren, zur Ermittlung der Zuspannenergie, bspw. des Bremsdruckes, in den Zuspanneinrichtungen 16, 24, bspw. Bremszylindern, der Vorder- und Hinterachse.

Die Zentralsteuereinheit 4 weist ferner Eingänge für Einrichtungen 36, 38 zur vorzugsweise ständigen Ermittlung der Temperaturen der Radbremsen, bspw. Temperatursensoren, auf. In der Zentralsteuereinheit 4 werden die ermittelten Temperaturen der Radbremsen der Räder der Vorderachse und der Hinterachse miteinander und mit einem vorbestimmten Temperaturgrenzwert verglichen. Wird festgestellt, dass die Temperaturen den Temperaturgrenzwert bei einem Bremsvorgang überschreiten, wird die Energieverteilung, bspw. Druckverteilung, zwischen den Radbremsen so gewählt, dass in die Radbremsen mit den höheren Temperaturen eine geringere Zuspannenergie, bspw. ein geringerer Bremsdruck, und in die Radbremsen mit den niedrigeren Temperaturen eine höhere Zuspannenergie, bspw. ein höherer Bremsdruck, eingesteuert wird als vor dem Überschreiten des Grenzwertes. Wenn bspw. die Temperatur der Hinterachsbremsen den Grenzwert überschreitet und höher ist als die Temperatur der Vorderachsbremsen, werden also die Hinterachsbremsen geringer belastet als vor dem Überschreiten des Temperaturgrenzwertes, um auf diese Weise den Temperaturunterschied zwischen den Achsen zu verringern. Hierzu kann eine geeignete zusätzliche elektronische Einrichtung 40 im Zentralsteuergerät 4 und/oder eine entsprechende Programmerweiterung der im Zentralsteuergerät enthaltenen Mikroprozessoren vorgesehen sein. Die entsprechende Zuspannenergieverteilung zwischen den Radbremsen, bspw. durch verringerte Druckeinsteuerung in die Bremszylinder der heißeren Bremsen, erfolgt vorzugsweise über die Energiezuteiler 14, 22, bspw. Druckmodulatoren, des EBS-Systems, kann aber auch über gesonderte Energiezuteiler (nicht dargestellt) erfolgen.

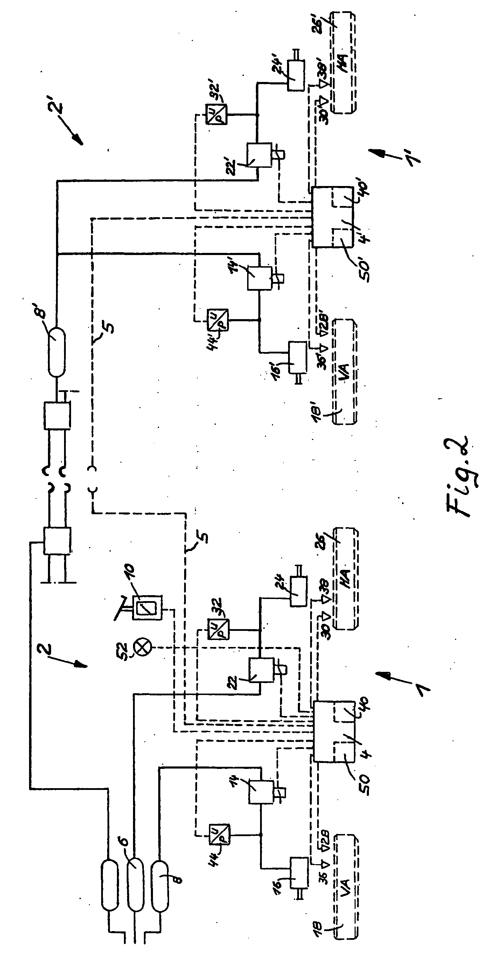

Die Fig. 2 zeigt schematisch eine Fahrzeugkombination aus einem Zugfahrzeug 1 und einem Anhängefahrzeug 1' mit jeweils einer bspw. pneumatisch betriebenen EBS-Bremsanlage 2, 2' mit einem Zentralsteuergerät 4, 4' für die Zuspannenergie-Regelung, in dem i. A. auch das ABS-System integriert ist. Die Zentralsteuergeräte 4, 4' sind über eine Signalleitung 5 miteinander verbunden. Energieleitungen, bspw. Druckleitungen, sind mit durchgezogenen Linien und elektrische Leitungen bzw. Signalleitungen sind mit gestrichelten Linien gezeichnet. Es sind nur die Räder und zugehörigen Bauteile, bspw. pneumatischen Bauteile, einer Seite der Vorderachsen VA, VA' und der Hinterachsen HA, HA' der Teilfahrzeuge 1, 1' der Fahrzeugkombination dargestellt.

Die zur Betätigung der Bremsen benötigte Energie, bspw. Druckluft, wird in Energiespeichern 6, 8, 8' bspw. Druckluftbehältern, bereitgestellt. Über einen Fahrer-Bremswertgeber 10 im Zugfahrzeug 1 gibt der Fahrer dem EBS-System einen Sollwert vor. Die Bremskreise sind jeweils zweikreisig ausgebildet und führen zum einen über Energiezuteiler 14, 14', bspw. Druckmodulatoren, zu einer Zuspanneinrichtung 16, 16', bspw. Bremszylinder, für Räder mit Radbremsen 18, 18' der Vorderachsen. Die anderen Bremskreise führen über weitere Energiezuteiler 22, 22', bspw. Druckmodulatoren, zu Zuspanneinrichtungen 24, 24', bspw. Bremszylindern, für Räder mit Radbremsen 26, 26' der Hinterachsen. Die Antiblockiersysteme erhalten über Radsensoren 28, 28', 30, 30' Informationen über das Drehverhalten der Räder. Sollten diese eine Blockierneigung zeigen, geben die Steuergeräte 4, 4' bzw. die in die Steuergeräte integrierten ABS-Systeme in bekannter Weise elektrische Signale an die Energiezuteiler 14, 14', 22, 22', bspw. Druckmodulatoren, aus, welche die Zuspannenergie, bspw. den Bremsdruck, herabsetzen und somit die Blockierneigung wieder beseitigen können.

Die Zentralsteuereinheiten 4, 4' besitzen Eingänge für Energiesensoren 32, 32', 44, 44', bspw. Drucksensoren, zur Ermittlung der Zuspannenergien, bspw. der Bremsdrücke, in den Zuspanneinrichtungen 16, 16', 24, 24', bspw. Bremszylindern, der Vorder- und Hinterachsen.

Die Zentralsteuereinheiten 4, 4' weisen ferner Eingänge für Einrichtungen 36, 36', 38, 38' zur vorzugsweise ständigen Ermittlung der Temperaturen der Radbremsen, bspw. Temperatursensoren, auf. In einer der Zentralsteuereinheiten 4, 4' werden die ermittelten Temperaturen der Radbremsen der Räder der Teilfahrzeuge 1, 1' fahrzeugweise miteinander und mit einem vorbestimmten Temperaturgrenzwert verglichen. Wird festgestellt, dass die Temperaturen voneinander um wenigstens einen vorbestimmten Wert abweichen und die Temperaturen der Radbremsen wenigstens eines Teilfahrzeugs 1, 1' den Temperaturgrenzwert bei einem Bremsvorgang überschreiten, wird in die Radbremsen des Teilfahrzeugs, bspw. Anhängefahrzeugs, dessen Radbremsentemperaturen größer sind als die Radbremsentemperaturen des anderen Teilfahrzeugs, bspw. Zugfahrzeugs, eine niedrigere Zuspannenergie eingesteuert als vor dem Überschreiten des Temperaturgrenzwertes und wird eine höhere Zuspannenergie in die Radbremsen des Teilfahrzeugs, bspw. Anhängefahrzeugs, eingesteuert als vor dem Überschreiten des Temperaturgrenzwertes, wenn die Radbremsentemperaturen dieses Teilfahrzeugs, bspw. Anhängefahrzeugs, kleiner sind als die Radbremsentemperaturen des anderen Teilfahrzeugs, bspw. Zugfahrzeugs. Hierzu kann wenigstens eine geeignete zusätzliche elektronische Einrichtung 40, 40' im Zentralsteuergerät 4, 4' und/oder eine entsprechende Programmerweiterung der im Zentralsteuergerät enthaltenen Mikroprozessoren vorgesehen sein. Die entsprechende Zuspannenergieverteilung zwischen den Radbremsen der Teilfahrzeuge 1, 1', bspw. durch verringerte Druckeinsteuerung in die Bremszylinder der einzelnen Bremsen, erfolgt vorzugsweise über die Energiezuteiler 14, 14', 22, 22', bspw. Druckmodulatoren, der EBS-Systeme, kann aber auch über gesonderte Energiezuteiler (nicht dargestellt) erfolgen.

Das Programm des EBS-Systems kann dahingehend ausgelegt werden, dass die Anhänger-Sollzuspannenergie oder die Zugfahrzeug-Sollzuspannenergie in Abhängigkeit von den ermittelten Radbremsentemperaturen verringert oder erhöht wird.

Das Programm kann auch so ausgelegt werden, dass bei Verringerung der Anhängefahrzeug-Sollzuspannungsenergie gleichzeitig die Zugfahrzeug-Sollzuspannenergie erhöht wird und dass bei Erhöhung der Anhängefahrzeug-Sollzuspannenergie gleichzeitig die Zugfahrzeug-Sollzuspannenergie verringert wird.

Die Änderungen der Sollzuspannenergien der Teilfahrzeuge können gesamtbremskraftneutral oder gesamtbremskraftverringernd erfolgen.

Anhand der Fig. 1 und 2 wurden radbremsentemperaturharmonisierende Bremsdruckregelungsverfahren und damit auch aktiv wirkende Überlastschutzverfahren beschrieben. Aufbauend auf diesen aktiv wirkenden, radbremsentemperaturberücksichtigenden Verfahren soll nachfolgend das erfindungsgemäße Fahrerwarnverfahren nebst Anordnung beschrieben werden. Die anhand der Fig. 1 und 2 beschriebenen Überlastschutzverfahren werten Radbremsentemperaturen aus. Dabei wird in Vergleichen ermittelt, ob eine einseitige Überlastung von Bremsen vorliegt oder evtl. alle Bremsen gleichmäßig zu hohe Temperaturen aufweisen. Im ersten Fall wird durch die Verfahren temperaturausgleichend eingegriffen, um die jeweils höher belastete Radbremse relativ zu schonen. Im zweiten Fall wird nicht temperaturausgleichend eingegriffen. In diesem zweiten Fall sollte aber auch eine Fahrerwarnung ausgesprochen werden.

Für die Fahrerwarnung weist/weisen die Zentralsteuereinheit(en) 4, 4' eine elektronische Einrichtung 50, 50' oder entsprechende Programmerweiterungen auf zur Erzeugung von unterschiedlichen Warnsignalen, die den Fahrer über eine Warneinrichtung 52 akustisch und/oder optisch warnen und/oder in Form einer subjektiv zu empfindenden Warnung ansprechen. Die ermittelten Radbremsentemperaturen oder Radbremsentemperaturmittelwerte werden radweise oder achsweise fahrzeugbezogen oder teilfahrzeugbezogen ausgewertet.

Es erfolgt eine Warnung der Stufe 1, wenn an einem Fahrzeug 1 oder an einem Teilfahrzeug 1, 1' einer Fahrzeugkombination an einer Achse den Temperaturgrenzwert übersteigende Temperaturen erreicht werden.

Es wird eine Warnung der Stufe 2 ausgegeben, wenn an einem Fahrzeug oder an einem Teilfahrzeug an mehr als einer Achse den Temperaturgrenzwert überschreitende Temperaturen erreicht werden. In diesem Fall liegt eine höhere Gefahr vor.

Wenn bei beiden bzw. allen Teilfahrzeugen einer Fahrzeugkombination den Temperaturgrenzwert überschreitende Radbremsentemperaturen festgestellt werden, erfolgt ebenfalls eine Warnung der Stufe 2.

Wie oben bereits erwähnt, sind die Warnsignale subjektiv zu empfindender Art.

Subjektiv zu empfindende Warnungen sind für eine Fahrerwarnung sehr zielführend. Um den Fahrer über ein Bremspedalfeeling zu warnen, kann im Falle der Ermittlung von den Grenzwert überschreitenden Radbremsentemperaturen eine abgespeicherte Feelingkurve flacher gelegt werden in Abhängigkeit vom jeweiligen Gefährdungspotential, also in Abhängigkeit von der absoluten Höhe der Spitzentemperatur und/oder der Durchschnittstemperatur oder von der Warnstufe. Die Feelingkurve kann dabei stufenweise flacher gelegt werden. Bspw. kann die Feelingkurve um eine Stufe flacher gelegt werden, wenn nur ein Teilfahrzeug Radbremsentemperaturen über dem Grenzwert aufweist, und kann um zwei Stufen flacher gelegt werden, wenn bspw. beide Teilfahrzeuge einer Fahrzeugkombination zu heiße Radbremsen aufweisen.

Wenn bei einer Fahrzeugkombination das Anhängefahrzeug die zu heißen Bremsen aufweist und dadurch bedingt die ihm abverlangte Bremsarbeit verringert wird, stoppt die Fahrzeugverzögerungsregelung. Hierdurch erfolgt kein Ausgleich für eine sich anschließend einstellende Unterbremsung des Fahrzeugs. Als Folge davon wird das Fahrzeug für den Fahrer gefühlsmäßig unterbremsen, was der Fahrer dann als Fading empfindet und als entsprechende Warnung auffasst.

Wenn das Zugfahrzeug die zu heißen Bremsen aufweist und dadurch die den Radbremsen des Anhängefahrzeugs abverlangte Bremsarbeit erhöht wird, kann die Feelingkurve flacher gelegt werden, was dem Fahrer über Bremspedalfeeling mitgeteilt wird; die Verzögerungsregelung bleibt aktiv.

Es kann auch das Bremsdruckniveau abgesenkt werden, wodurch sich dann unmittelbar eine Verringerung der Ist-Fahrzeugverzögerung einstellt, was der Fahrer ebenfalls als Fading empfindet.

Das beschriebene Warnverfahren kann mit einer Motorleistungsbegrenzung kombiniert sein, um im Überlastfall eine Reduzierung des zulässigen Motormomentes zu bewirken. Es ist auch möglich, im festgestellten Überlastfall das Fahren mit höherer Geschwindigkeit nicht mehr zuzulassen. Automatische Getriebe schalten in diesem Fall nicht mehr hoch, damit die kinetische Energie kleiner bleibt und die Motorschleppleistung größer wird.

Wenn zu hohe Radbremsentemperaturen ermittelt worden sind, werden externe Soll-Abbremsungsanforderungen bspw. von Abstandsregelungssystemen, Geschwindigkeitsregelungssystemen, Antriebsschlupfregelungssystemen etc. nicht oder nur eingeschränkt zugelassen. So sind Antriebsschlupfregelungen nur dann uneingeschränkt zugelassen, wenn die heißen Bremsen nicht die der Antriebsachse sind. Sind diese Bremsen aber auch schon auf einem relativ hohen Temperaturniveau, sind nur noch eingeschränkte Antriebsschlupf-Regelungsvorgänge erlaubt, z. B. in Form einer Zeitbeschränkung oder nur bis zu einem bestimmten Temperaturniveau oder nach vergleichbaren Radbremsen schonenden Kriterien.

## Patentansprüche

1. Verfahren zur Überwachung von Fahrzeugbremsen (18, 26, 18', 26') von elektronisch geregelten Bremssystemen auf Überlast von Fahrzeugen sowie von Fahrzeugkombinationen aus mindestens einem Zug- und Anhängefahrzeug (1, 1'), ggf. mit einer Koppelkraftregelung zur Anpassung oder wenigstens weitgehenden Anpassung der durch die Anhängefahrzeugbremse (18', 26') bewirkten Anhängefahrzeugverzögerung an die durch die Zugfahrzeugbremse (18, 26) bewirkte Zugfahrzeugverzögerung, wobei die Temperaturen oder Temperaturmittelwerte der Radbremsen der Räder des Fahrzeugs oder der Teilfahrzeuge der Fahrzeugkombination ermittelt und mit einem vorbestimmten Temperaturgrenzwert verglichen werden und wobei
- ein erstes Fahrer-Warnsignal "Warnstufe 1" ausgegeben wird, wenn die Temperatur einer Radbremse oder der Temperaturmittelwert der Radbremsen an einer Achse des Fahrzeugs oder eines Teilfahrzeugs den Temperaturgrenzwert überschreitet und
- ein zweites Fahrer-Warnsignal "Warnstufe 2" ausgegeben wird, wenn die ermittelten Temperaturen oder Temperaturmittelwerte der Radbremsen an mehr als einer Achse des Fahrzeugs oder wenigstens eines Teilfahrzeugs oder sämtlicher Teilfahrzeuge der Fahrzeugkombination den Temperaturgrenzwert überschreiten, und wobei
- die Warnsignale subjektiv zu empfindende Signale sind,
**dadurch gekennzeichnet, dass** das subjektiv zu empfindende Signal durch ein Bremspedalfeeling entsprechend einer abgespeicherten Feelingkurve realisiert wird, und dass die Feelingkurve in Abhängigkeit von den Wamstufen oder von den ermittelten absoluten Spitzentemperaturen der Radbremsen (18, 26, 18', 26') stetig oder stufenweise flacher gelegt wird.

2. Verfahren nach Anspruch 1, **dadurch gekennzeichnet, dass** die Feelingkurve um eine Stufe flacher gelegt wird, wenn nur ein Teilfahrzeug (1, 1') Radbremsentemperaturen über dem Temperaturgrenzwert aufweist, und um zwei Stufen flacher gelegt wird, wenn beide Teilfahrzeuge Radbremsentemperaturen über dem Temperaturgrenzwert aufweisen.

3. Verfahren nach Anspruch 1, **dadurch gekennzeichnet, dass** dem Fahrer ein Fadingempfinden vermittelt wird, wenn die Radbremsen (18', 26') des Anhängefahrzeugs (1') Temperaturen über dem Temperaturgrenzwert aufweisen.

4. Verfahren nach Anspruch 1, **dadurch gekennzeichnet, dass** dem Fahrer ein Fadingempfinden vermittelt wird, wenn die Radbremsen (18, 26) des Zugfahrzeugs (1) Temperaturen über dem Temperaturgrenzwert aufweisen und das Druckniveau gesenkt wird.

5. Verfahren nach Anspruch 1, **dadurch gekennzeichnet, dass** bei Ermittlung von Radbremsentemperaturen über dem Temperaturgrenzwert externe Soll-Abbremsungsanforderungen von z. B. Abstandsregeleinrichtungen oder ASR-Regeleinrichtungen oder Geschwindigkeitsregelungssystemen etc. nicht oder nur eingeschränkt zugelassen werden.

6. Verfahren nach Anspruch 1, **dadurch gekennzeichnet, dass** im Überlastfall die Motorleistung begrenzt wird durch Reduzierung des zulässigen Motormomentes.

7. Verfahren nach Anspruch 1, **dadurch gekennzeichnet, dass** im Überlastfall Fahren mit hoher Geschwindigkeit unterbunden wird, bspw. automatische Getriebe nicht mehr hochschalten.

8. Anordnung zur Durchführung des Verfahrens nach einem der vorhergehenden Ansprüche mit einem Bremswertgeber (10) und mit wenigstens einem elektronisch geregelten Bremssystem von Fahrzeugen und von Fahrzeugkombinationen aus wenigstens einem Zug- und Anhängefahrzeug (1, 1'), ggf. mit einer Einrichtung zur Koppelkraftregelung zur Anpassung oder wenigstens weitgehenden Anpassung der durch die Anhängefahrzeugbremse (18', 26') bewirkten Anhängefahrzeugverzögerung an die durch die Zugfahrzeugbremse (18, 26) bewirkte Zugfahrzeugverzögerung, so dass bei einer Bremsung keine oder nur eine Kraft von zulässiger Größe vom Anhängefahrzeug (1') auf das Zugfahrzeug (1) und umgekehrt übertragen wird, wobei
- Einrichtungen (36, 38, 36', 38') zur Ermittlung der Temperaturen oder von Temperaturmittelwerten der Radbremsen (18, 26, 18', 26') der Räder des Fahrzeugs (1) oder der Teilfahrzeuge (1, 1') vorgesehen sind, deren Temperatur-Signale in einem Zentralsteuergerät (4, 4') des EBS-Systems (2) oder der EBS-Systeme (2, 2') oder in wenigstens einer separaten Auswerteeinrichtung (50, 50') fahrzeug- oder teilfahrzeugbezogen rad- oder achsweise mit einem vorbestimmten Temperaturgrenzwert verglichen werden, und wobei
- das Zentralsteuergerät (4, 4') oder die separate Auswerteeinrichtung (50, 50') Fahrerwarnsignale abgibt, wenn die ermittelten Temperaturen oder Temperaturmittelwerte den Temperaturgrenzwert überschreiten, und wobei
- das Zentralsteuergerät (4, 4') oder die Auswerteeinrichtung (50, 50') ein erstes Fahrer-Warnsignal "Warnstufe 1" erzeugt, wenn die Temperatur oder der Temperaturmittelwert der Radbremsen an einer Achse des Fahrzeugs (1) oder eines Teilfahrzeugs (1, 1') den Temperaturgrenzwert überschreitet und ein zweites Fahrer-Warnsignal "Warnstufe 2" erzeugt, wenn die ermittelten Temperaturen oder Temperaturmittelwerte der Radbremsen an mehr als einer Achse des Fahrzeugs oder wenigstens eines Teilfahrzeugs oder sämtlicher Teilfahrzeuge der Fahrzeugkombination den Temperaturgrenzwert überschreiten,
- wobei die Warnsignale ein subjektives Warnempfinden auslösen,
**dadurch gekennzeichnet,**
**dass** in der Zentralsteuereinheit (4, 4') oder der Auswerteeinrichtung (50, 50') eine Bremspedal-Feelingkurve abgespeichert ist, die im Überlastfall in Abhängigkeit von der Warnstufe und/oder der absoluten Temperatur oder der mittleren Temperatur flacher gelegt wird.

9. Anordnung nach Anspruch 8, **dadurch gekennzeichnet, dass** die Temperatur der Radbremsen (18, 26, 18', 26') des Fahrzeugs (1) oder der Teilfahrzeuge (1, 1') mittels Temperatursensoren (36, 38, 36', 38') oder nach einem Temperaturmodell unter Berücksichtigung eines den Belastungszustand der Bremse repräsentierenden Lastsignals oder der Wärmeenergiezufuhr zu der Bremse oder Verformung von Bauteilen der Bremse oder der momentanen Fahrzeugverzögerung und der Fahrzeuggeschwindigkeit oder anderer geeigneter Parameter im Zentralsteuergerät (4, 4') ermittelt wird.

10. Anordnung nach einem der vorhergehenden Ansprüche, **dadurch gekennzeichnet, dass** das Zentralsteuergerät (4, 4') oder die Auswerteeinrichtung (50, 50') zusätzlich die Spitzentemperaturen der den Temperaturgrenzwert überschreitenden Temperaturen der Radbremsen (18, 26, 18', 26') ermittelt.

11. Anordnung nach Anspruch 8, **dadurch gekennzeichnet, dass** durch eine Änderung der Bremsarbeit im Überlastfall dem Fahrer ein Gefühl von Fading vermittelt wird.

12. Anordnung nach einem der Ansprüche 8-11, **dadurch gekennzeichnet, dass** externe Soll-Abbremsungsanforderungen, bspw. von Abstandsregelungs-, Geschwindigkeitsregelungs-, Antriebsschlupfregelungssystemen etc. im Überlastfall nicht oder nur eingeschränkt zugelassen sind.

13. Anordnung nach einem der Ansprüche 8-12, **dadurch gekennzeichnet, dass** im Überlastfall durch die Warnsignale das zulässige Motormoment reduziert wird zur Begrenzung der Motorleistung.

14. Anordnung nach einem der Ansprüche 8-13, **dadurch gekennzeichnet, dass** im Überlastfall durch die Warnsignale das Fahren mit hoher Geschwindigkeit verhindert wird.

15. Anordnung nach Anspruch 14, **dadurch gekennzeichnet, dass** das Hochfahren bei einem automatischen Getriebe blockiert wird.

## Claims

1. Method for monitoring vehicle brakes (18, 26, 18', 26') of electronically controlled brake systems for overloading in vehicles and vehicle combinations composed of at least one towing vehicle and trailer vehicle (1, 1'), if appropriate with a coupling force controller for adapting or at least largely adapting the deceleration of the trailer vehicle brought about by the trailer vehicle brake (18', 26') to the deceleration of the towing vehicle brought about by the towing vehicle brake (18, 26), wherein the temperatures or mean temperature values of the wheel brakes of the wheels of the vehicle or of the component vehicles of the vehicle combination are determined and compared with a predetermined temperature limiting value, and wherein
- a first driver warning signal "Warning level 1" is output if the temperature of a wheel brake or the mean temperature value of the wheel brakes at an axle of the vehicle or of a component vehicle exceeds the temperature limiting value, and
- a second driver warning signal "Warning level 2" is output if the determined temperatures or mean temperature values of the wheel brakes at more than one axle of the vehicle or of at least one component vehicle or of all the component vehicles of the vehicle combination exceed the temperature limiting value, and wherein
- the warning signals are signals which can be felt subjectively,
**characterized in that** the signal which can be felt subjectively is implemented as a brake pedal feeling corresponding to a stored feeling curve, and **in that** the feeling curve is made continuously or incrementally flatter as a function of the warning levels or the determined absolute peak temperatures of the wheel brakes (18, 26, 18', 26').

2. Method according to Claim 1, **characterized in that** the feeling curve is made flatter by an increment if just one component vehicle (1, 1') has wheel brake temperatures above the temperature limiting value, and is made flatter by two increments if both component vehicles have wheel brake temperatures above the temperature limiting value.

3. Method according to Claim 1, **characterized in that** a fading sensation is conveyed to the driver if the wheel brakes (18', 26') of the trailer vehicle (1') have temperatures above the temperature limiting value.

4. Method according to Claim 1, **characterized in that** a fading sensation is conveyed to the driver if the wheel brakes (18, 26) of the towing vehicle (1) have temperatures above the temperature limiting value and the pressure level is lowered.

5. Method according to Claim 1, **characterized in that** when wheel brake temperatures above the temperature limiting value are determined, external setpoint braking requests from, for example, distance controllers or traction control devices or cruise control systems etc. are not permitted or are permitted only to a limited extent.

6. Method according to Claim 1, **characterized in that** in the case of overloading the engine power is limited by reducing the permissible engine torque.

7. Method according to Claim 1, **characterized in that** in the case of overloading driving at a high speed is prohibited, and, for example, automatic transmissions no longer shift up.

8. Arrangement for carrying out the method according to one of the preceding claims having a brake value signal transmitter (10) and having at least one electronically controlled brake system of vehicles and of vehicle combinations from at least one towing vehicle and trailer vehicle (1, 1'), if appropriate with a coupling force controller for adapting or at least largely adapting the deceleration of the trailer vehicle brought about by the trailer vehicle brake (18', 26') to the deceleration of the towing vehicle brought about by the towing vehicle brake (18, 26), with the result that when braking occurs no force, or only a force of a permissible magnitude, is transmitted from the trailer vehicle (1') to the towing vehicle (1), and vice versa, wherein
- devices (36, 38, 36', 38') for determining the temperatures or mean temperature values of the wheel brakes (18, 26, 18', 26') of the wheels of the vehicle (1) or of the component vehicles (1, 1') are provided, the temperature signals of which devices (36, 38, 36', 38') are compared in a central control device (4, 4') of the EBS system (2) or of the EBS systems (2, 2') or in at least one separate evaluation device (50, 50') with a predetermined temperature limiting value, related to a vehicle or component vehicle on a wheel basis or axle basis, and wherein
- the central control device (4, 4') or the separate evaluation device (50, 50') outputs driver warning signals if the determined temperatures or mean temperature values exceed the temperature limiting value, and wherein
- the central control device (4, 4') or the evaluation device (50, 50') generates a first driver warning signal "Warning level 1" if the temperature or the mean temperature value of the wheel brakes at an axle of the vehicle (1) or of a component vehicle (1, 1') exceeds the temperature limiting value, and generates a second driver warning signal "Warning level 2" if the determined temperatures or mean temperature values of the wheel brakes at more than one axle of the vehicle or at least one component vehicle or of all the component vehicles of the vehicle combination exceed the temperature limiting value,
- wherein the warning signals trigger a subjective warning sensation,
**characterized in that** a brake pedal feeling curve, which in the case of overloading is made flatter as a function of the warning level and/or the absolute temperature or the mean temperature, is stored in the central control unit (4, 4') or the evaluation device (50, 50').

9. Arrangement according to Claim 8, **characterized in that** the temperature of the wheel brakes (18, 26, 18', 26') of the vehicle (1) of the component vehicles (1, 1') is determined by means of temperature sensors (36, 38, 36', 38') or according to a temperature model taking into account a load signal representing the load state of the brake, or taking into account the supply of thermal energy to the brake or the deformation of components of the brake or the instantaneous deceleration of the vehicle or the speed of the vehicle or other suitable parameters in the central control device (4, 4').

10. Arrangement according to one of the preceding claims, **characterized in that** the central control device (4, 4') or the evaluation device (50, 50') additionally determines the peak temperatures of the temperatures of the wheel brakes (18, 26, 18', 26') which exceed the temperature limiting value.

11. Arrangement according to Claim 8, **characterized in that** a sensation of fading is conveyed to the driver by changing the braking work in the case of overloading.

12. Arrangement according to one of Claims 8-11, **characterized in that** external setpoint braking requests, for example from distance controllers, cruise control systems, traction control systems, etc. are not permitted in the case of overloading or are permitted only to a limited extent.

13. Arrangement according to one of Claims 8-12, **characterized in that** in the case of overloading the permissible engine torque is reduced by the warning signals in order to limit the engine power.

14. Arrangement according to one of Claims 8-13, **characterized in that** in the case of overloading driving at a high speed is prevented by the warning signals.

15. Arrangement according to Claim 14, **characterized in that** shifting up in the case of an automatic transmission is blocked.

## Revendications

1. Procédé de surveillance de la surcharge de freins de véhicule (18, 26, 18', 26') de systèmes de frein à régulation électronique de véhicules ainsi que de combinaisons de véhicules constituées d'au moins un véhicule tracteur et d'un véhicule remorque (1, 1'), éventuellement avec une régulation de la force d'accouplement pour l'adaptation ou au moins l'adaptation substantielle du ralentissement du véhicule remorque provoqué par le frein du véhicule remorque (18', 26') au ralentissement du véhicule tracteur provoqué par le frein du véhicule tracteur (18, 26), les températures ou les valeurs moyennes de température des freins de roue des roues du véhicule ou des véhicules partiels de la combinaison de véhicules étant détectées et comparées à une valeur limite de température prédéfinie, et dans lequel :
- un premier signal d'avertissement du conducteur "niveau d'avertissement 1" est émis lorsque la température d'un frein de roue ou la valeur moyenne de température des freins de roue sur un essieu du véhicule ou d'un véhicule partiel dépasse la valeur limite de température, et
- un deuxième signal d'avertissement du conducteur "niveau d'avertissement 2" est émis lorsque les températures détectées ou les valeurs moyennes de température détectées des freins de roue sur plus d'un essieu du véhicule ou d'au moins un véhicule partiel ou de tous les véhicules partiels de la combinaison de véhicules dépassent la valeur limite de température, et dans lequel
- les signaux d'avertissement sont des signaux à ressentir de manière subjective,
**caractérisé en ce que** le signal à ressentir de manière subjective est réalisé par une sensation sur la pédale de frein correspondant à une courbe de sensation mémorisée, et **en ce que** la courbe de sensation est aplatie de manière constante ou par échelons en fonction des niveaux d'avertissement ou des températures de pointe absolues détectées des freins de roue (18, 26, 18', 26').

2. Procédé selon la revendication 1, **caractérisé en ce que** la courbe de sensation est située à un niveau plus plat lorsque seulement un véhicule partiel (1, 1') présente des températures de freins de roue au-dessus de la valeur limite de température et est située à deux niveaux plus plats lorsque les deux véhicules partiels présentent des températures de freins de roue au-dessus de la valeur limite de température.

3. Procédé selon la revendication 1, **caractérisé en ce que** le conducteur ressent une sensation d'affaiblissement lorsque les freins de roue (18', 26') du véhicule remorque (1') présentent des températures au-dessus de la valeur limite de température.

4. Procédé selon la revendication 1, **caractérisé en ce que** le conducteur ressent une sensation d'affaiblissement lorsque les freins de roue (18, 26) du véhicule tracteur (1) présentent des températures au-dessus de la valeur limite de température et lorsque le niveau de pression est abaissé.

5. Procédé selon la revendication 1, **caractérisé en ce que** lorsque l'on détecte des températures des freins de roue au-dessus de la valeur limite de température, des commandes de freinage de consigne externes, par exemple de dispositifs de contrôle de distance ou de dispositifs de régulation ASR ou de systèmes de régulation de la vitesse etc. ne sont pas autorisés ou seulement de manière limitée.

6. Procédé selon la revendication 1, **caractérisé en ce que** dans le cas d'une surcharge, la puissance du moteur est limitée en réduisant le couple moteur autorisé.

7. Procédé selon la revendication 1, **caractérisé en ce que** dans le cas d'une surcharge, la conduite à grande vitesse n'est pas autorisée, par exemple la boîte de vitesses automatique ne passe plus aux rapports supérieurs.

8. Agencement pour mettre en oeuvre le procédé selon l'une quelconque des revendications précédentes, comprenant un générateur de valeur de freinage (10) et au moins un système de frein à régulation électronique de véhicules et de combinaisons de véhicules constituées d'au moins un véhicule tracteur et d'un véhicule remorque (1, 1'), éventuellement avec un dispositif de régulation de la force d'accouplement pour l'adaptation ou au moins l'adaptation substantielle du ralentissement du véhicule remorque provoqué par le frein du véhicule remorque (18', 26') au ralentissement du véhicule tracteur provoqué par le frein du véhicule tracteur (18, 26), de sorte que dans le cas d'un freinage, aucune force ou seulement une force d'amplitude autorisée ne soit transmise du véhicule remorque (1') au véhicule tracteur (1) et inversement, dans lequel :
- des dispositifs (36, 38, 36', 38') pour détecter les températures ou des valeurs moyennes de températures des freins de roue (18, 26, 18', 26') des roues du véhicule (1) ou des véhicules partiels (1, 1') sont prévus, dont les signaux de température sont comparés avec une valeur limite de température prédéterminée en fonction du véhicule ou des véhicules partiels pour chaque roue ou chaque essieu, dans un appareil de commande central (4, 4') du système EBS (2) ou des systèmes EBS (2, 2') ou dans au moins un dispositif d'analyse séparé (50, 50'), et dans lequel
- l'appareil de commande central (4, 4') ou le dispositif d'analyse séparé (50, 50') émet des signaux d'avertissement du conducteur quand les températures détectées ou les valeurs moyennes de température détectées dépassent la valeur limite de température, et dans lequel
- l'appareil de commande central (4, 4') ou le dispositif d'analyse (50, 50') produit un premier signal d'avertissement du conducteur "niveau d'avertissement 1" quand la température ou la valeur moyenne de température des freins de roue sur un essieu du véhicule (1) ou d'un véhicule partiel (1, 1') dépasse la valeur limite de température et produit un deuxième signal d'avertissement du conducteur "niveau d'avertissement 2" quand les températures détectées ou les valeurs moyennes de températures détectées des freins de roue sur plus d'un essieu du véhicule ou d'au moins un véhicule partiel ou de tous les véhicules partiels de la combinaison de véhicule dépassent la valeur limite de température,
- les signaux d'avertissement déclenchant un avertissement ressenti de manière subjective,
**caractérisé en ce que**
dans l'unité de commande centrale (4, 4') ou le dispositif d'analyse (50, 50') est mémorisée une courbe de sensation de pédale de frein qui est aplatie dans le cas d'une surcharge en fonction du niveau d'avertissement et/ou de la température absolue ou de la température moyenne.

9. Agencement selon la revendication 8, **caractérisé en ce que** la température des freins de roue (18, 26, 18', 26') du véhicule (1) ou des véhicules partiels (1, 1') est détectée au moyen de capteurs de température (36, 38, 36', 38') ou suivant un modèle de température en tenant compte d'un signal de charge représentant l'état de charge du frein ou de l'apport en énergie thermique au frein ou de la déformation de composants du frein ou du ralentissement momentané du véhicule et de la vitesse du véhicule ou d'autres paramètres appropriés dans l'appareil de commande central (4, 4').

10. Agencement selon l'une quelconque des revendications précédentes, **caractérisé en ce que** l'appareil de commande central (4, 4') ou le dispositif d'analyse (50, 50') détecte en outre les températures de pointe des températures des freins de roue (18, 26, 18', 26') dépassant la valeur limite de température.

11. Agencement selon la revendication 8, **caractérisé en ce que** le conducteur ressent une sensation d'affaiblissement par une variation du travail des freins dans le cas d'une surcharge.

12. Agencement selon l'une quelconque des revendications 8 à 11, **caractérisé en ce que** des commandes de freinage de consigne externes, par exemple par des systèmes de contrôle de distance, des systèmes de régulation de la vitesse ou des systèmes de régulation du glissement d'entraînement etc., ne sont pas autorisées ou seulement dans une mesure limitée, en cas de surcharge.

13. Agencement selon l'une quelconque des revendications 8 à 12, **caractérisé en ce que** dans le cas d'une surcharge, le couple moteur autorisé est réduit par les signaux d'avertissement pour limiter la puissance du moteur.

14. Agencement selon l'une quelconque des revendications 8 à 13, **caractérisé en ce que** dans le cas d'une surcharge, la conduite à grande vitesse est empêchée par les signaux d'avertissement.

15. Agencement selon la revendication 14, **caractérisé en ce que** le passage à la vitesse supérieure est bloqué pour une boîte de vitesses automatique.
